# EUROPEAN PATENT SPECIFICATION

(11) **EP 2 367 370 B1**
(45) Date of publication and mention of the grant of the patent: **03.04.2013**
(21) Application number: 11002256.3
(22) Date of filing: 18.03.2011
(51) Int. Cl.: H04W 8/00

(54) **Search methods applied to a personal network gateway in converged personal network service systems and related converged personal network service systems and mobile devices**
Suchverfahren, die auf ein Gateway eines persönlichen Netzes in konvergierten persönlichen Netzdienstsystemen angewendet werden, und zugehörige konvergierte persönliche Netzdienstsysteme und Mobilfunkgeräte
Procédés de recherche appliqués à une passerelle de réseau personnel dans des systèmes de service de réseau personnel combinés et systèmes de service de réseau personnel combinés associés et dispositifs mobiles

(30) Priority: 18.03.2010 US 315269 P; 15.03.2011 US 201113048506
(43) Date of publication of application: 21.09.2011
(73) Proprietor: HTC Corporation, Taoyuan County 330 (TW)
(72) Inventor: Yang, Ju-Ting, Taoyuan City Taoyuan County 330 (TW); Chien, Ho-Sung, Taoyuan City Taoyuan County 330 (TW)
(74) Representative: Ljungberg, Robert

(56) References cited:
- US-A1- 2009 287 827
- Open Mobile Alliance: "Converged Personal Network Service Requirements, OMA-RD-CPNS-V1_0-20091117-C", , 17 November 2009 (2009-11-17), XP002643237, Retrieved from the Internet: URL:http://www.openmobilealliance.org/Tech nical/release_program/docs/CPNS/V1_0-20091 117-C/OMA-RD-CPNS-V1_0-20091117-C.pdf [retrieved on 2011-06-17]

## Description

### BACKGROUND OF THE INVENTION

### Field of the Invention

The invention generally relates to wireless communication systems and search methods thereof, and more particularly, to Converged Personal Network Service (CPNS) systems and search methods applied to a personal network gateway (PN-GW) in a CPNS system.

### Description of the Related Art

As technology advances, more and more functionalities and platforms are being developed for the portable devices and users are increasingly connecting their portable devices to short-range Personal Networks (PNs) such as home networks and in-car networks. Connecting these PNs to other networks can greatly extend the accessibility of the devices, or Personal Network Elements (PNE(s)), in the PNs, enabling a number of compelling services, including access by PNE(s) to services outside of the PN. For example, a Bluetooth-connected personal media player (PMP) may use a mobile phone's WAN connection to receive a video streamed from the Internet. A converged network is a collection of individual networks that are interconnected by means of PN Gateway (PN-GW) devices. All devices within a PN can be linked to a PN-GW. For the OMA (Open Mobile Alliance) CD (Content Delivery)-CPNS protocol specification, a CPNS Server, PN-GW and PNE(s) constitute the basic architecture of a CPNS. The CPNS Server may reply to requests from the PN-GW and ensures that the appropriate application is selected and appropriate content is provided to the PNE(s). The PN-GW serves as an intermediary entity between the PNE(s) and other networks that forwards the requests from the PNE(s) to the other networks and vice versa. PNE(s) are connected to the PN-GW and/ or connected between each other for rendering the content received from the PN-GW or from each other.

Different from a normal PN-GW, the concept for a Zone PN-GW has been proposed to provide better service publication and utility for the PNEs. The Zone in the CPNS is a specific geographic area dependant on the signaling capacities of physical bearers used or on the intention of the service provider or users. A Zone PN-GW searches its zone regularly (periodically) to find out if some PNE which had been located outside of a PN entered into the PN. The Zone PN-GW may then broadcast and/or unicast messages advertising the existence of the Zone PN-GW.

Conventionally, a fixed search period, the waiting time between two consecutive searches, is provided for a Zone PN-GW to search its zone regularly (periodically). To perform an effective periodical search, a good mechanism for the periodical search period may be desired. Too frequent and aggressive searches may result in larger power/battery consumption of the PN-GW which might be a mobile phone or set box.

On the other hand, the PN-GW may fail to get the latest-updated list of PNE(s) with a longer search period, thereby losing the advantage of the PN-GW to advertise its services and existence to the PNEs within the zone as soon as possible.

Open Mobile Alliance: "Converged Personal Network Service Requirements, OMA-RD- CPNS- V1_0-20091117- C", discloses a system in which a node in a wireless network searches periodically to discover other nodes.

US 2009/0287827 discloses a technique for node discovery in a wireless network.

### BRIEF SUMMARY OF THE INVENTION

Accordingly, embodiments of the invention provide search methods applied to a personal network gateway (PN-GW) in a converged personal network service (CPNS) system. In one aspect of the invention, a search method applied to a personal network gateway (PN-GW) in a converged personal network service (CPNS) system is provided. First, a search procedure to search for personal network elements (PNEs) in a specific zone of the CPNS system is periodically performed every search period. Upon expiration of each search period, whether any undetected PNE has entered the specific zone is determined and the search period is adaptively adjusted according to the determination result

In another aspect of the invention, a converged personal network service (CPNS) system is provided which comprises a plurality of personal network elements (PNEs) and a personal network gateway (PN-GW). The personal network gateway (PN-GW) periodically performs a search procedure for searching the PNEs in a specific zone of the CPNS system every search period and determines whether any undetected PNE has entered the specific zone and adaptively adjusts the search period according to the determination result upon expiration of each search period.

In yet another aspect of the invention, a mobile device is provided which comprises a processing unit for periodically performing a search procedure to search for personal network elements (PNEs) in a specific zone of a converged personal network service (CPNS) system every search period and determining whether any undetected PNE has entered the specific zone and adaptively adjusting the search period according to the determination result upon expiration of each search period.

Other aspects and features of the present invention will become apparent to those with ordinarily skill in the art upon review of the following descriptions of specific embodiments of search methods applied to a personal network gateway (PN-GW) in a converged personal network service (CPNS) system.

### BRIEF DESCRIPTION OF DRAWINGS

The invention can be more fully understood by reading the subsequent detailed description and examples with references made to the accompanying drawings, wherein:

Fig. 1 is a block diagram illustrating a converged personal network service system according to an embodiment of the invention;

Fig. 2 is a block diagram illustrating a converged personal network service system according to another embodiment of the invention;

Fig. 3 is a flow chart illustrating a search method applied to a PN-GW in a converged personal network service system according to an embodiment of the invention;

Fig. 4 is a flow chart illustrating a search method applied to a PN-GW in a converged personal network service system according to another embodiment of the invention; and

Fig. 5 is a block diagram illustrating a PN communications system according to another embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense.

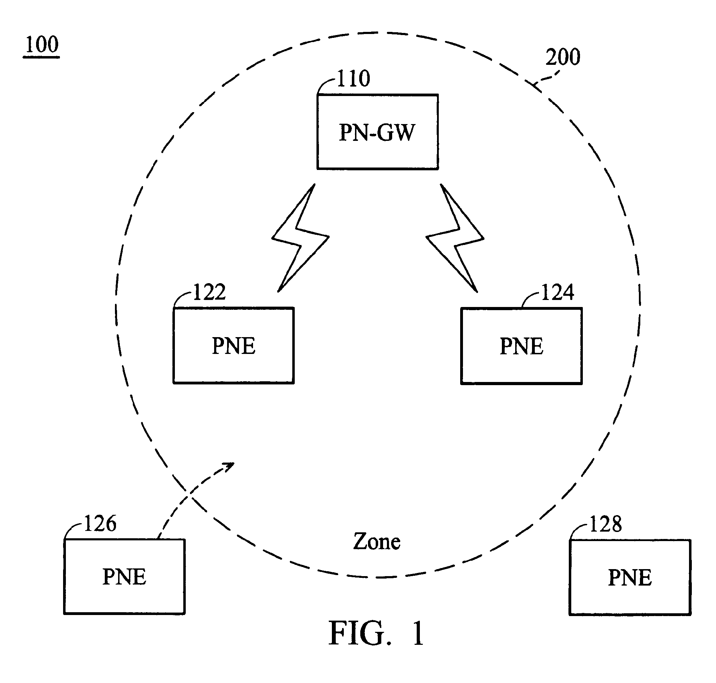

Fig. 1 is a block diagram illustrating a PN communications system according to an embodiment of the invention. Particularly, the PN communications system is a CPNS system 100 capable of providing CPNS. The CPNS system 100 includes at least one PN gateway (PN-GW) 110 and PNEs 122, 124, 126 and 128. The PNEs 122 and 124 may have the capability of communicating with each other within the system 100, either directly or indirectly through the PN-GW 110 over other communication networks, such as a wireless personal area network (WPAN), wireless local area network (WLAN), or wide area network (WAN) communication network.

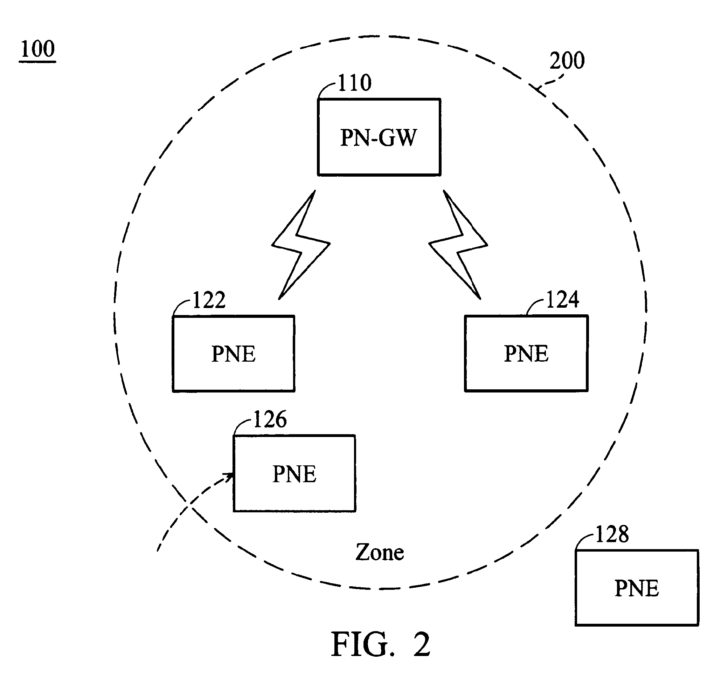

The PNEs 122, 124, 126 and 128 may include for example, mobile and handheld devices and computers, such as mobile phones, set boxes, personal digital assistants, navigation systems, laptop computers, MP3 players, remote servers and the like. The PN-GW 110 may include, for example, mobile and handheld devices and computers, such as mobile phones, set boxes, personal digital assistants, navigation systems, laptop computers, MP3 players, remote servers and the like. In this embodiment, the PN-GW 110 is a mobile device comprising at least one processing unit, e.g. a mobile phone, but the invention is not limited thereto. As shown in Fig. 1, the PN-GW 110 may have its own zone 200 determined by its signaling abilities (e.g. 10∼100m for Bluetooth) and the PN-GW 110 performs a periodical search procedure to discover any new PNE which has entered into the zone 200, from being located at outside of the zone 200. For example, referring to Fig. 1, the PNEs 126 and 128 are located at outside of the zone 200 and may enter to the zone 200 later, as shown in Fig. 2. Therefore, the PN-GW 110 has to perform a search procedure periodically for searching for PNEs within its zone 200 and discover any newly entered PNE (e.g. the PNE 126 shown in Fig. 2) for subsequent processes.

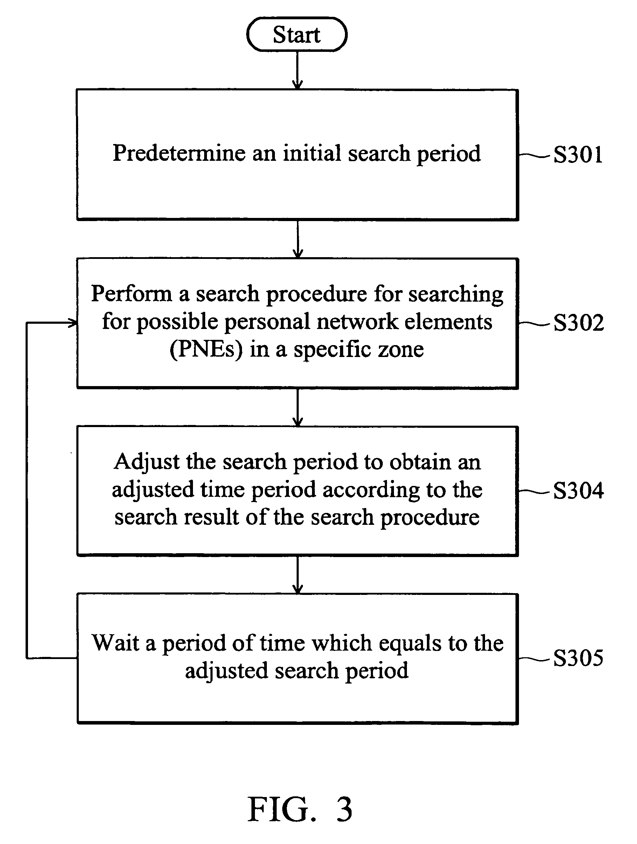

Fig. 3 is a flow chart illustrating a search method applied to a PN-GW in a CPNS system according to an embodiment of the invention. The method can be applied to the PN-GW 110 of the CPNS system 100 as shown in Fig. 1. The PN-GW 110 may be, for example, a mobile device capable of performing a gateway function within a specific zone (e.g. the zone 200), such as a mobile phone.

First, in step S301, an initial search period indicating the waiting time between two consecutive searches is predetermined by the PN-GW 110. In this embodiment, assuming that a predetermined search period t is initially set by the PN-GW 110. Next, in step S302, a search procedure for searching for PNEs in a specific zone (e.g. the zone 200) of the CPNS system 100 is performed by the PN-GW 110. That is to say, the PN-GW 110 checks whether any undetected PNE which is the PNE located outside of the specific zone and not previously detected has entered the specific zone. For example, the PNEs may be portable devices such as mobile phones, but it is not limited thereto. Then, in step S304, the search period is adaptively adjusted to an adjusted search period according to the search result by the PN-GW 110.

In step S305, the PN-GW 110 waits a period of time which equals to the adjusted search period and after the period of time is reached, the PN-GW 110 returns to step S302 for performing next search procedure to determining whether any new PNE, located outside of the specific zone and not previously detected, has entered into the specific zone so as to adaptively extend or shorten the search period according to the determination result for each search procedure.

After the search procedure in step S302 has been performed, the search period may be adaptively extended or shortened, in step S304, to an adjusted search period according to the determination of whether a PNE located outside of the specific zone (such as the PNE 126 shown in Fig. 1) and not previously detected, has entered into the specific zone. When it is determined that at least one PNE, located outside of the specific zone and not previously detected (such as the PNE 126 shown in Fig. 1), has entered into the specific zone, the search period may be shortened. On the other hand, the search period may be extended when it is determined that there is no PNE, located outside of the specific zone and not previously detected, has entered into the specific zone.

The search period t may be shortened or extended according to a specific formula. In this embodiment, for example, the search period t can be adjusted by following formula: T = α* t , where T represents the adjusted search period and 0 < α < 1 (1). For example, if α =0.5, the search period t can be shortened to a smaller search period T=0.5*t, which means that the adjusted search period T is half of the previous search period t.

Similarly, in one embodiment, the search period t can be extended by following formula: T = β * t , where T represents the adjusted search period and β >1 1 (2). For example, if β =2, the search period t can be extended to a longer search period T=2*t, which means that the adjusted search period T is the double of the previous search period t. After the search period is adjusted, the PN-GW 110 may perform subsequent search procedures using the adjusted search period.

For example, if the search period t is shortened to a smaller search period T=0.5*t, the PN-GW 110 may perform next search procedure using the adjusted search period 0.5*t. In this case, the time needed for next search is only half of that for current search. Therefore, by shortening or extending the search period, the PN-GW 110 can perform a more or a less aggressive/frequent search for possible PNE(s) respectively.

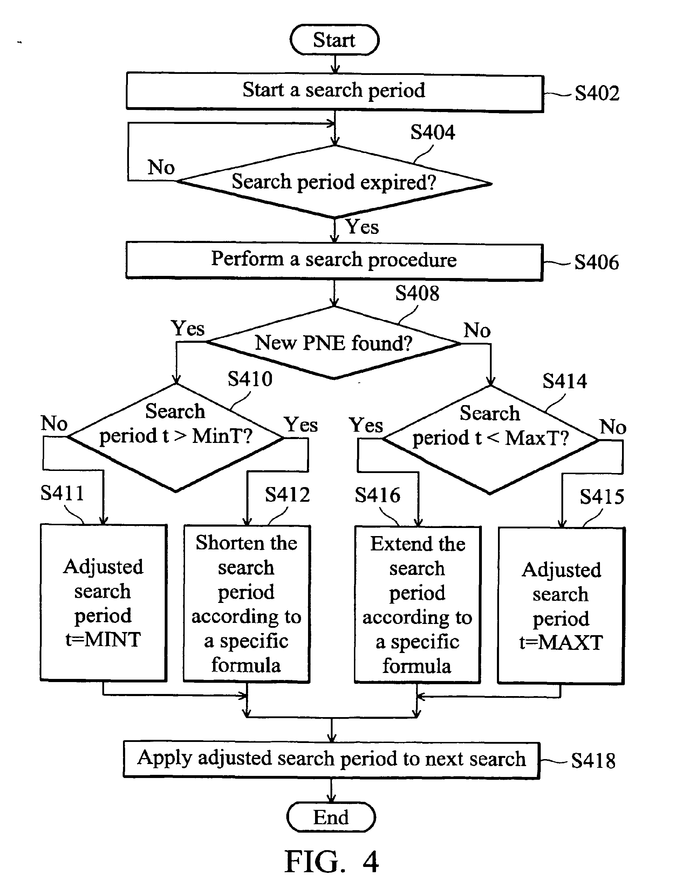

Fig. 4 is a flow chart illustrating a search method applied to a PN-GW in a CPNS system according to another embodiment of the invention. The method can be applied to the PN-GW 110 of the CPNS system as shown in Fig. 1.

First, in step S402, the PN-GW 110 starts a search period and determines whether the search period is expired (step S404). When the search period has expired, in step S406, the PN-GW 110 performs a search procedure for searching for possible PNEs in a specific zone of the CPNS system 100. In this embodiment, assuming that a predetermined search period t is set. Conventionally, the search period t is fixed. That is, the PN-GW 110 may set a timer to count the number of the search period t and performs the search procedure to search for the PNEs within the specific zone when the search period t has expired. After the search procedure is completed, in step S408, the PN-GW 110 further determines that whether any undetected PNE has entered the specific zone.

When determining that at least one undetected PNE has been found (Yes in step S408), in step S410, the PN-GW 110 further determines that whether the search period t has exceeded a minimum value MinT. The minimum value MinT may be predetermined determined or may be configured based on the specification and network requirements. For example, in one embodiment, if the search period t is shortened by the aforementioned formula (1):T = α * t, the minimum value MinT can be defined as follows:

MinT = α ⁿ* t, where 0 < α <1 and n is predetermined depending on the capabilities of the PN-GW 110. For example, if n is 5, MinT = α ⁵* t.

If the search period t has exceeded the minimum value MinT (Yes in step S410), in step S412, the search period t is shortened according to a specific formula (e.g. the formula (1)). It is to be understood that, in some embodiments, the shortened search period may be further compared with the minimum value MinT and may be set to the minimum value MinT once its value is less than the MinT.

Contrarily, if the search period t is equal to or less than the minimum value MinT (No in step S410), in step S411, the minimum value of the search period has reached and thus it will maintain at the same value as the minimum value MinT ( i.e. the search period t will be adjusted to the minimum value MinT) and the shortening of the search period will be stopped.

Meanwhile, when determining that no undetected PNE has been found in step S408 (No in step S408), in step S414, it is further determined that whether the search period t is less than a maximum value MaxT. The maximum value MaxT may be predetermined determined or may be configured based on the specification and network requirements. For example, in one embodiment, if the search period t is extended by the aforementioned formula (2): T = β * t , the maximum value MaxT can be defined as follows:

MaxT = 2 β ⁿ* t , where β >1 and n depends on the capabilities of the PN-GW 110.

If the search period t is less than the maximum value MaxT (Yes in step S414), in step S416, the search period is extended according to a specific formula (e.g. the formula (1)). It is to be understood that, in some embodiments, the extended search period may be further compared with the maximum value MaxT and may be set to the maximum value MaxT once its value exceeds the MaxT.

Contrarily, if the search period has exceeded or equals to the maximum value MaxT (No in step S414), in step S415, the maximum value of the search period has reached and thus it will be maintained at the same value as the maximum value MaxT (i.e. the search period t will be adjusted to the maximum value MaxT) and the extending of the search period will be stopped.

After the adjustment of the search period has completed, in step S418, the adjusted search period will be further applied in next search procedure. For example, if the search period t is extended to a longer search period T=2*t, the PN-GW 110 may perform next search procedure using the adjusted search period 2*t. In this case, the time needed for next search will be the double of current search so that the PN-GW 110 can perform a less aggressive/frequent search for possible PNE(s) to save more power.

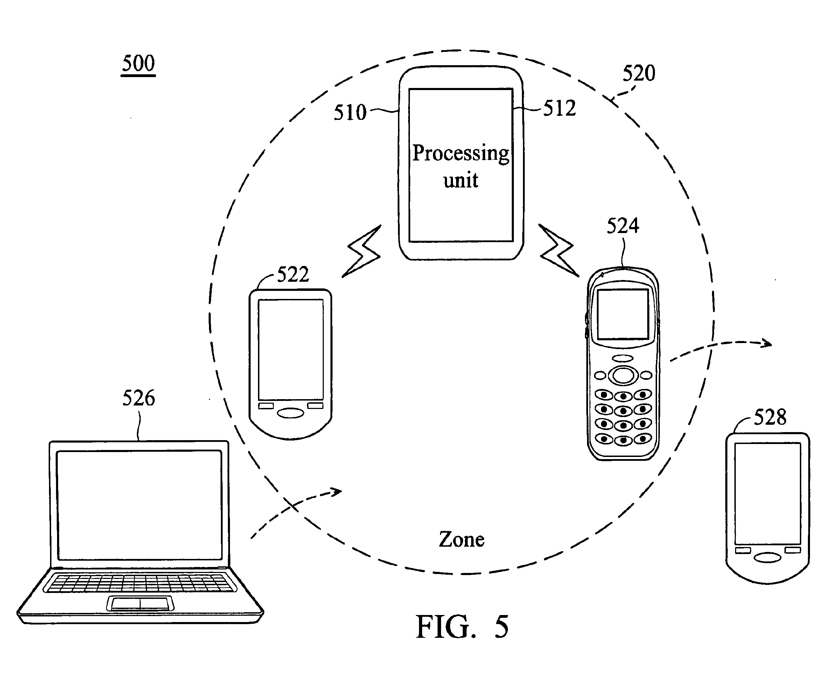

For explanation, one specific embodiment is illustrated in the following to explain the detailed process of a search method of the invention, and those skilled in the art will understand that this specific embodiment is used for explanation only and the invention is not limited thereto. Fig. 5 is a block diagram illustrating a PN communications system according to another embodiment of the invention. In this embodiment, it is assumed that the mobile device 510 (e.g. a mobile phone) including at least one processing unit 512 is served as a PN-GW in the CPNS system 500 and PNEs 522, 524, 526 and 528 are other mobile and handheld devices, such as PDAs, notebook and smart phones. The processing unit 512 of the mobile device 510 may perform the aforementioned search method as showing in Fig. 4. It is also assumed that the search period for the periodical search is predefined as a search period t=10 minutes and formulas (1) and (2) are utilized, wherein α is set to be 0.5 while β is set to be 2. As previously discussed, the processing unit 512 may periodically perform a search procedure for searching for PNEs in a specific zone 520 every search period and determine whether any undetected PNE has entered the specific zone 520 and then adaptively adjust the search period according to the determination result upon expiration of each search period. In this embodiment, upon expiration of a first search period (i.e. 10 minutes), if no undetected PNE entering the zone 520 has been found and the search period t is less than the maximum value MaxT, the processing unit 512 extends the search period t by formula (2) so that the search period t is adjusted to an extended search period T = β * t = 2* 10 = 20 (minutes). Therefore, the second search will be performed after 20 minutes later. Contrarily, if at least one undetected PNE has entered the zone is found upon expiration of the first search period and the search period t has exceeded the minimum value MinT, the processing unit 512 shortens the search period t by formula (1) so that the search period is adjusted to a shortened search period T = α * t = 0.5* 10 = 5 (minutes). Therefore, the second search will be quickly performed only after 5 minutes later.

Once the condition of the newly found PNE is met, the search period will be gradually decreased and thus more aggressive/frequent searches for possible PNE(s) can be achieved. In contrast, once the condition of no newly found PNE is met, the search period will be gradually increased and thus less aggressive/ frequent searches for possible PNE(s) can be achieved.

In summary, according to the search method for a PN gateway (e.g. a mobile phone) in a specific zone of the CPNS system, the search period of the periodical search may be adaptively adjusted according to a determination of whether any undetected PNE entering the specific zone is found upon expiration of each search period, providing an adaptive and periodical search mechanism. The search period can be extended to perform less aggressive/frequent searches for possible PNEs when the determination result of the previous search indicates that there is no newly found PNE in the specific zone, thereby saving power/battery consumption of the PN gateway. Moreover, the search period can also be shortened to perform more aggressive/frequent searches for possible PNEs when the determination result of the * previous search indicates that there is at least one newly found PNE, thereby providing instant PN gateway advertisement of the existence and service publication for the found PNEs in its zone.

Search methods for a PN gateway in a specific zone of the CPNS system and systems thereof, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope of this invention. Therefore, the scope of the present invention shall be defined and protected by the following claims and their equivalents.

## Claims

1. A search method applied to a personal network gateway, PN-GW, (110) in a converged personal network service, CPNS, system (100), comprising:
periodically performing a search procedure to search for personal network elements, PNEs, in a specific zone (200) of the CPNS system (100) every search period; and
upon expiration of each search period, determining whether any undetected PNE (126) which is the PNE (126) located outside of the specific zone (200) and not previously detected has entered the specific zone (200) and adaptively adjusting the search period according to the determination result by shortening the search period when determining that at least one undetected PNE (126) has entered the specific zone (200); and
extending the search period when determining that no undetected PNE has entered the specific zone (200).

2. The search method of claim 1, wherein the search period t is extended by the following formula:
T = ß*t, where T represents the adjusted search period and ß >1.

3. The search method of claim 1, wherein the search period t is shortened by the following formula:
T = α*t, where T represents the adjusted search period and 0<α <1.

4. The search method of claim 1, wherein the shortening step further comprises:
determining whether the search period is equal to or less than a minimum value when determining that at least one undetected PNE (126) has entered the specific zone (200); and
if the search period is equal to or less than the minimum value, stop shortening of the search period.

5. The search method of claim 1, wherein the extending step further comprises:
determining whether the search period equals to or has exceeded a maximum value when determining that no undetected PNE (126) has entered the specific zone (200); and
if the search period equals to or has exceeded the maximum value, stop extending of the search period.

6. The search method of claim 1, wherein the PN-GW (110) comprises a mobile phone.

7. A converged personal network service, CPNS, system (100), comprising:
a plurality of personal network elements, PNEs; and
a personal network gateway, PN-GW, (110), adapted to periodically perform a search procedure for searching the PNEs in a specific zone (200) of the CPNS system (100) every search period and to determine whether any undetected PNE (126) which is the PNE (126) located outside of the 25 specific zone (200) and not previously detected has entered the specific zone (200) and to adaptively adjust the search period according to the determination result upon expiration of each search period wherein the PN-GW (110) is further adapted to shorten the search period when determining that at least one undetected PNE (126) has entered the specific zone (200) and 30 the PN-GW (110) is further adapted to extend the search period when determining that no undetected PNE (126) has entered the specific zone (200).

8. A mobile device, comprising:
a processing unit (512), adapted to periodically perform a search procedure to search for personal network elements, PNEs, in a specific zone (520) of a converged personal network service, CPNS, system (500) every search period and to determine whether any undetected PNE (526) which is the PNE (526) located outside of the specific zone (520) and not previously detected has entered the specific zone (520) and to adaptively adjust the search period according to the determination result upon expiration of each search period wherein the processing unit (512) further adapted to shorten the search period when determining that at least one undetected PNE (526) has entered the specific zone (520) and the processing unit (512) is further adapted to extend the search period when determining that no undetected PNE has entered the specific zone (520).

9. The mobile device of claim 8, wherein the search period t is extended by the following formula:
T = ß*t, where T represents the adjusted search period and ß >1.

10. The mobile device of claim 8, wherein the search period t is shortened by the following formula:
T = α*t, where T represents the adjusted search period and 0<α <1.

11. The mobile device of claim 8, wherein the processing unit (512) is further adapted to determine whether the search period is equal to or less than a minimum value when determining that at least one undetected PNE (526) has entered the specific zone (520) and if so, stop shortening of the search period.

12. The mobile device of claim 8, wherein the processing unit (512) is further adapted to determine whether the search period equals to or has exceeded a maximum value when determining that no undetected PNE has entered the specific zone (520) and if so, stop extending of the search period.

## Patentansprüche

1. Ein Suchverfahren, das auf ein persönliches Netzgateway, PN-GW, (110) in einem konvergierten persönlichen Netzdienst-System, CPNS-System, (100) angewendet wird, das Folgendes beinhaltet:
periodisches Durchführen eines Suchvorgangs, um in jeder Suchperiode nach persönlichen Netzelementen, PNE, in einer spezifischen Zone (200) des CPNS-Systems (100) zu suchen; und
nach Ablauf jeder Suchperiode, Bestimmen, ob ein nicht erfasstes PNE (126), welches das außerhalb der spezifischen Zone (200) befindliche und nicht zuvor erfasste PNE (126) ist, in die spezifische Zone (200) eingetreten ist, und adaptives Anpassen der Suchperiode gemäß dem Bestimmungsergebnis durch Verkürzen der Suchperiode,
wenn bestimmt wird, dass mindestens ein nicht erfasstes PNE (126) in die spezifische Zone (200) eingetreten ist; und
Verlängern der Suchperiode, wenn bestimmt wird, dass kein nicht erfasstes PNE in die spezifische Zone (200) eingetreten ist.

2. Suchverfahren gemäß Anspruch 1, wobei die Suchperiode t durch die folgende Formel verlängert wird:
T=β*t, wobei T für die angepasste Suchperiode steht und β>1.

3. Suchverfahren gemäß Anspruch 1, wobei die Suchperiode t durch die folgende Formel verkürzt wird:
T=α*t, wobei T für die angepasste Suchperiode steht und 0<α<1.

4. Suchverfahren gemäß Anspruch 1, wobei der Verkürzungsschritt ferner Folgendes beinhaltet:
Bestimmen, ob die Suchperiode gleich oder kleiner als ein Mindestwert ist, wenn bestimmt wird, dass mindestens ein nicht erfasstes PNE (126) in die spezifische Zone (200) eingetreten ist; und
wenn die Suchperiode gleich oder kleiner als der Mindestwert ist, Abbrechen des Verkürzens der Suchperiode.

5. Suchverfahren gemäß Anspruch 1, wobei der Verlängerungsschritt ferner Folgendes beinhaltet:
Bestimmen, ob die Suchperiode gleich einem Höchstwert ist oder diesen überschritten hat, wenn bestimmt wird, dass kein nicht erfasstest PNE (126) in die spezifische Zone (200) eingetreten ist; und
wenn die Suchperiode gleich dem Höchstwert ist oder diesen überschritten hat, Abbrechen des Verlängerns der Suchperiode.

6. Suchverfahren gemäß Anspruch 1, wobei das PN-GW (110) ein Mobiltelefon beinhaltet.

7. Ein konvergiertes persönliches Netzdienst-System, CPNS-System, (100), das Folgendes beinhaltet:
eine Vielzahl von persönlichen Netzelementen, PNE; und
ein persönliches Netzgateway, PN-GW, (110), das angepasst ist, um periodisch einen Suchvorgang durchzuführen, um in jeder Suchperiode nach den PNE in einer spezifischen Zone (200) des CPNS-Systems (100) zu suchen und um zu bestimmen,
ob ein nicht erfasstes PNE (126), welches das außerhalb der spezifischen Zone (200) befindliche und nicht zuvor erfasste PNE (126) ist, in die spezifische Zone (200) eingetreten ist und um die Suchperiode gemäß dem Bestimmungsergebnis nach Ablauf jeder Suchperiode adaptiv anzupassen, wobei das PN-GW (110) ferner angepasst ist,
um die Suchperiode zu verkürzen, wenn bestimmt wird, dass mindestens ein nicht erfasstes PNE (126) in die spezifische Zone (200) eingetreten ist, und das PN-GW (110) ferner angepasst ist, um die Suchperiode zu verlängern, wenn bestimmt wird, dass kein nicht erfasstes PNE (126) in die spezifische Zone (200) eingetreten ist.

8. Ein mobiles Gerät, das Folgendes beinhaltet:
eine Verarbeitungseinheit (512), die angepasst ist, um periodisch einen Suchvorgang durchzuführen, um in jeder Suchperiode nach persönlichen Netzelementen, PNE, in einer spezifischen Zone (520) eines konvergierten persönlichen Netzdienst-Systems, CPNS-Systems, (500) zu suchen und um zu bestimmen, ob ein nicht erfasstes PNE (526), welches das außerhalb der spezifischen Zone (520) befindliche und nicht zuvor erfasste PNE (526) ist, in die spezifische Zone (520) eingetreten ist und um die Suchperiode gemäß dem Bestimmungsergebnis nach Ablauf jeder Suchperiode adaptiv anzupassen, wobei die Verarbeitungseinheit (512) ferner angepasst ist, um die Suchperiode zu verkürzen, wenn bestimmt wird, dass mindestens ein nicht erfasstes PNE (526) in die spezifische Zone (520) eingetreten ist, und die Verarbeitungseinheit (512) ferner angepasst ist, um die Suchperiode zu verlängern, wenn bestimmt wird, dass kein nicht erfasstes PNE in die spezifische Zone (520) eingetreten ist.

9. Mobiles Gerät gemäß Anspruch 8, wobei die Suchperiode t durch die folgende Formel verlängert wird:
T=β*t, wobei T für die angepasste Suchperiode steht und β>1.

10. Mobiles Gerät gemäß Anspruch 8, wobei die Suchperiode t durch die folgende Formel verkürzt wird:
T=a*t, wobei T für die angepasste Suchperiode steht und 0<α<1.

11. Mobiles Gerät gemäß Anspruch 8, wobei die Verarbeitungseinheit (512) ferner angepasst ist, um zu bestimmen, ob die Suchperiode gleich oder kleiner als ein Mindestwert ist, wenn bestimmt wird, dass mindestens ein nicht erfasstes PNE (526) in die spezifische Zone (520) eingetreten ist und wenn ja, Abbrechen des Verkürzens der Suchperiode.

12. Mobiles Gerät gemäß Anspruch 8, wobei die Verarbeitungseinheit (512) ferner angepasst ist, um zu bestimmen, ob die Suchperiode gleich einem Höchstwert ist oder diesen überschritten hat, wenn bestimmt wird, dass kein nicht erfasstes PNE in die spezifische Zone (520) eingetreten ist und wenn ja, Abbrechen des Verlängerns der Suchperiode.

## Revendications

1. Un procédé de recherche appliqué à une passerelle pour réseau personnel, PN-GW, (110) dans un système de service de réseau personnel convergent, CPNS, (100), comprenant le fait :
d'exécuter périodiquement une procédure de recherche pour rechercher des éléments de réseau personnel, PNE, dans une zone spécifique (200) du système CPNS (100) chaque période de recherche ; et
à l'expiration de chaque période de recherche, de déterminer si tout PNE non détecté (126), lequel est le PNE (126) situé à l'extérieur de la zone spécifique (200) et qui n'a pas été détecté précédemment, est entré dans la zone spécifique (200) et d'ajuster de manière adaptative la période de recherche selon le résultat de la détermination en raccourcissant la période de recherche lorsqu'il est déterminé qu'au moins un PNE non détecté (126) est entré dans la zone spécifique (200) ; et
en allongeant la période de recherche lorsqu'il est déterminé qu'aucun PNE non détecté n'est entré dans la zone spécifique (200).

2. Le procédé de recherche de la revendication 1, dans lequel la période de recherche t est allongée par la formule suivante :
T = β*t, où T représente la période de recherche ajustée et β > 1.

3. Le procédé de recherche de la revendication 1, dans lequel la période de recherche t est raccourcie par la formule suivante :
T = α*t, où T représente la période de recherche ajustée et 0 < α < 1.

4. Le procédé de recherche de la revendication 1, dans lequel l'étape de raccourcissement comprend en outre le fait :
de déterminer si la période de recherche est égale ou inférieure à une valeur minimum lorsqu'il est déterminé qu'au moins un PNE non détecté (126) est entré dans la zone spécifique (200) ; et
si la période de recherche est égale ou inférieure à la valeur minimum, de stopper le raccourcissement de la période de recherche.

5. Le procédé de recherche de la revendication 1, dans lequel l'étape d'allongement comprend en outre le fait :
de déterminer si la période de recherche égale ou a excédé une valeur maximum lorsqu'il est déterminé qu'aucun PNE non détecté (126) n'est entré dans la zone spécifique (200) ; et
si la période de recherche égale ou a excédé la valeur maximum, de stopper l'allongement de la période de recherche.

6. Le procédé de recherche de la revendication 1, dans lequel la PN-GW (110) comprend un téléphone mobile.

7. Un système de service de réseau personnel convergent, CPNS, (100), comprenant :
une pluralité d'éléments de réseau personnel, PNE ; et
une passerelle pour réseau personnel, PN-GW, (110), conçue pour exécuter périodiquement une procédure de recherche pour rechercher les PNE dans une zone spécifique (200) du système CPNS (100) chaque période de recherche et pour déterminer si tout PNE non détecté (126), lequel est le PNE (126) situé à l'extérieur de la zone spécifique (200) et qui n'a pas été détecté précédemment, est entré dans la zone spécifique (200) et pour ajuster de manière adaptative la période de recherche selon le résultat de la détermination à l'expiration de chaque période de recherche, la PN-GW (110) étant en outre conçue pour raccourcir la période de recherche lorsqu'il est déterminé qu'au moins un PNE non détecté (126) est entré dans la zone spécifique (200) et la PN-GW (110) étant en outre conçue pour allonger la période de recherche lorsqu'il est déterminé qu'aucun PNE non détecté (126) n'est entré dans la zone spécifique (200).

8. Un dispositif mobile, comprenant :
une unité de traitement (512), conçue pour exécuter périodiquement une procédure de recherche pour rechercher des éléments de réseau personnel, PNE, dans une zone spécifique (520) d'un système de service de réseau personnel convergent, CPNS, (500) chaque période de recherche et pour déterminer si tout PNE non détecté (526), lequel est le PNE (526) situé à l'extérieur de la zone spécifique (520) et qui n'a pas été détecté précédemment, est entré dans la zone spécifique (520) et pour ajuster de manière adaptative la période de recherche selon le résultat de la détermination à l'expiration de chaque période de recherche, l'unité de traitement (512) étant en outre conçue pour raccourcir la période de recherche lorsqu'il est déterminé qu'au moins un PNE non détecté (526) est entré dans la zone spécifique (520) et l'unité de traitement (512) étant en outre conçue pour allonger la période de recherche lorsqu'il est déterminé qu'aucun PNE non détecté n'est entré dans la zone spécifique (520).

9. Le dispositif mobile de la revendication 8, dans lequel la période de recherche t est allongée par la formule suivante :
T = β*t, où T représente la période de recherche ajustée et β > 1.

10. Le dispositif mobile de la revendication 8, dans lequel la période de recherche t est raccourcie par la formule suivante :
T = α*t, où T représente la période de recherche ajustée et 0 < α < 1.

11. Le dispositif mobile de la revendication 8, dans lequel l'unité de traitement (512) est en outre conçue pour déterminer si la période de recherche est égale ou inférieure à une valeur minimum lorsqu'il est déterminé qu'au moins un PNE non détecté (526) est entré dans la zone spécifique (520) et si c'est le cas, pour stopper le raccourcissement de la période de recherche.

12. Le dispositif mobile de la revendication 8, dans lequel l'unité de traitement (512) est en outre conçue pour déterminer si la période de recherche égale ou a excédé une valeur maximum lorsqu'il est déterminé qu'aucun PNE non détecté n'est entré dans la zone spécifique (520) et si c'est le cas, pour stopper l'allongement de la période de recherche.
